# EUROPÄISCHE PATENTANMELDUNG

(11) **EP 1 586 515 A1**
(43) Veröffentlichungstag der Anmeldung: **19.10.2005**
(21) Anmeldenummer: 04008771.0
(22) Anmeldetag: 13.04.2004
(51) Int. Cl.: B65D 85/66, H02K 15/00, B65D 90/00, B64F 5/00, B65D 88/74

(54) **Schwertransportbehälter zum lagern und transportieren eines generator- oder erregerläufers**

(71) Anmelder: SIEMENS AKTIENGESELLSCHAFT, 80333 München (DE)
(72) Erfinder: Neikes, Bernd, 45479 Mülheim an der Ruhr (DE); Scholten, Thomas, 46119 Oberhausen (DE)

(57) **Zusammenfassung**

Die Erfindung betrifft einen Schwertransportbehälter (1) zum Lagern und Transportieren eines um eine Rotationsachse (4) drehbar ausgebildeten Generatorläufers (5) oder Erregerläufers mit einem Behälteroberteil (2) und einem Behälterunterteil (3), wobei das Behälteroberteil (2) mit dem Behälterunterteil (3) verbunden ist, wobei das Behälteroberteil (2) und das Behälterunterteil (3) aus biegesteifem Material ausgebildet sind.

## Beschreibung

Die vorliegende Erfindung betrifft einen Schwertransportbehälter zum Lagern und Transportieren eines um eine Rotationsachse drehbar ausgebildeten Generator- oder Erregerläufers.

Elektrische Maschinen, die mit Generator- oder Erregerläufer ausgestattet sind, sind in unterschiedlichsten Arten bekannt.

Die Leistung eines Generators für den Einsatz in der kommunalen Energieversorgung liegt üblicherweise zwischen 10 MW bis einigen 100 MW. Die Größe und die Gewichte der Generatorläufer sind für den Einsatz in der kommunalen Energieversorgung vergleichsweise groß. Ein transportfähiger Generatorläufer oder Erregerläufer kann unter Umständen sogar mehr als 200t schwer sein.

Von Großkomponenten, wie Turbinen und Generatoren, ist bekannt, sie für Transportzwecke in ihre einzelnen Bestandteile zu zerlegen, wobei jeweils der Generatorläufer oder Erregerläufer für sich sowie die Gehäuseschalen für sich transportfähig verpackt werden. Da es sich bei derartigen Bauteilen um hochwertige Metallteile handelt, die durch Korrosionseffekte in ihrer Funktion wesentlich beeinträchtigt werden können, wird bei der Verpackung im allgemeinen streng darauf geachtet, dass jeglicher Zutritt von Korrosionsmedien, z. B. feuchte Luft, verhindert wird. Zu diesem Zwecke ist es üblich, die jeweiligen Komponenten mit Plastikfolien zu umhüllen und in die Hülle jeweils Trocknungsmittel zur Absorption von Feuchtigkeit aus der Luft beizugeben. Derart geschützt werden die einzelnen Teile der Großkomponente zum jeweiligen Zielort transportiert und häufig über längere Zeit dort gelagert, um im Schadensfall als Ersatz zu dienen.

Schon beim Transport der Generatorläufer oder Erregerläufer mittels spezieller Transportpaletten vom Herstellungsort zum Anwendungsort wird darauf geachtet, dass keine Fremdpartikel zum Generatorläufer oder Erregerläufer gelangen. Trotz großer Sorgfalt bei der Abdeckung des Generatorläufers oder Erregerläufers mit den Abdeckfolien ist ein Eindringen von Luftfeuchtigkeit und Staub häufig nicht vermeidbar.

Der vorliegenden Erfindung liegt daher die Aufgabe zugrunde, eine verbesserte Möglichkeit zum Transport und zum Lagern von Generatorläufern oder Erregerläufern anzugeben.

Die Aufgabe wird gelöst durch einen Schwertransportbehälter zum Lagern und Transportieren eines um eine Rotationsachse drehbar ausgebildeten Generatorläufers oder Erregerläufers, gekennzeichnet durch ein Behälteroberteil und ein Behälterunterteil, wobei Behälteroberteil und Behälterunterteil biegesteif ausgebildet und gasdicht miteinander verbunden sind, und zumindest das Behälterunterteil aus einem auf das Gewicht des Generatorläufers oder Erregerläufers abgestimmten tragfähigen Material ausgebildet sind.

Durch den erfindungsgemäßen Schwertransportbehälter wird die Möglichkeit geschaffen, einen Generatorläufer oder Erregerläufer zu lagern und zu transportieren, wobei durch das gasdichte Verbinden des Behälteroberteils und des Behälterunterteils ein wirksames Mittel gegen das Eindringen von Fremdpartikeln gegeben ist. Darüber hinaus wird, der Generatorläufer oder Erregerläufer vor äußeren Einwirkungen wirksam geschützt.

Das Behälteroberteil und das Behälterunterteil sind aus biegesteifem Material ausgebildet, die Tragfähigkeit des Behälterunterteils ermöglicht den Verzicht auf zusätzliche Transportschlitten o.ä..

Die Anordnung mit dem Behälteroberteil und dem Behälterunterteil ermöglicht eine vereinfachte Entnahme des Generators- bzw. Erregerläufers.

Ein weiterer Vorteil des Schwertransportbehälters liegt darin, dass Widerstands- oder Stickstoffgehaltmessungen von außen durchgeführt werden können. Darüber hinaus ist der Schwertransportbehälter für den Schiffs- und LKW-Transport geeignet.

Da ein beim Stand der Technik Umpacken des Generator- bzw. Erregerläufers, zum Beispiel alle zwei Jahre, entfällt, fallen Folgekosten für die Lagerung erheblich gering aus.

In einer vorteilhaften Ausgestaltung der Erfindung wird dauerhaft an dem Schwertransportbehälter eine Stickstoffversorgungseinheit angeordnet.

Dadurch wird die Möglichkeit geschaffen, durch permanentes Durchströmen des Innenraumes des Schwertransportbehälters mit Stickstoff eine Stickstoffatmosphäre zu schaffen, die einen gleichbleibenden Druck aufweist. Eventuellen Lecks zwischen dem Behälteroberteil und dem Behälterunterteil wird quasi durch kontinuierliches Zuführen von Stickstoff entgegengewirkt.

In einer weiteren vorteilhaften Ausgestaltung der Erfindung wird an dem Schwertransportbehälter eine Einlassöffnung zum Anschluss einer Stickstoffversorgungseinheit zum Befüllen des Schwertransportbehälters mit Stickstoff angeordnet.

Dadurch wird die Möglichkeit geschaffen, im Innenraum des Schwertransportbehälters eine Stickstoffatmosphäre zu schaffen, was zu einer Verbesserung der Korrosionsbeständigkeit des Generatorläufers oder Erregerläufers führt. Feuchte Luft wird hierbei aus dem Innenraum herausgedrängt. Dies führt zu einer Konservierung des Generator bzw. Erregerläufers, was zu einer Langzeitlagerungsmöglichkeit führt.

In einer weiteren vorteilhaften Ausgestaltung wird zwischen dem Behälteroberteil und dem Behälterunterteil ein Dichtungselement angeordnet.

Dadurch wird die Möglichkeit geschaffen, mittels eines Dichtungselementes eine Minimierung von möglicherweise auftretenden Undichtheiten zwischen dem Behälteroberteil und dem Behälterunterteil zu vermeiden.

In einer weiteren vorteilhaften Ausgestaltung ist das Dichtungselement als eine Dichtschnur ausgebildet.
Dadurch wird eine geeignete Maßnahme geliefert, die Dichtung zwischen dem Behälteroberteil und dem Behälterunterteil mit einer leicht austauschbaren Masse auszubilden.

In einer weiteren vorteilhaften Ausgestaltung weist der Schwertransportbehälter der Außenumfangsform des Generatorläufers oder Erregerläufers angepasste Auflageelemente zum Ablegen des Läufers auf. Des weiteren weist der Schwertransportbehälter Befestigungselemente zum Befestigen des Generatorläufers oder Erregerläufers in einer zur Rotationsachse parallel verlaufenden Längsrichtung auf.

Dadurch wird die Möglichkeit geschaffen, den Generatorläufer oder Erregerläufer, der unter Umständen ein Gewicht von mehr als 200t aufweisen kann, möglichst gut an dem Schwertransportbehälter zu befestigen. Somit wird äußeren Kräften, die bei dem Transport auftreten können, wirksam entgegengetreten.

Ausführungsbeispiele der Erfindung werden nachfolgend unter Bezugnahme auf die Zeichnungen näher beschrieben. Dabei haben mit denselben Bezugszeichen versehene Komponenten die gleiche Funktionsweise.

Dabei zeigen:
- Figur 1: eine perspektivische Darstellung eines Schwertransportbehälters;
- Figur 2: eine Frontansicht des Schwertransportbehälters;
- Figur 3: eine Seitenansicht des Schwertransportbehälters,
- Figur 4: eine weitere perspektivische Darstellung eines Schwertransportbehälters und
- Figur 5: vergrößerte Darstellung einer Befestigungsmöglichkeit.

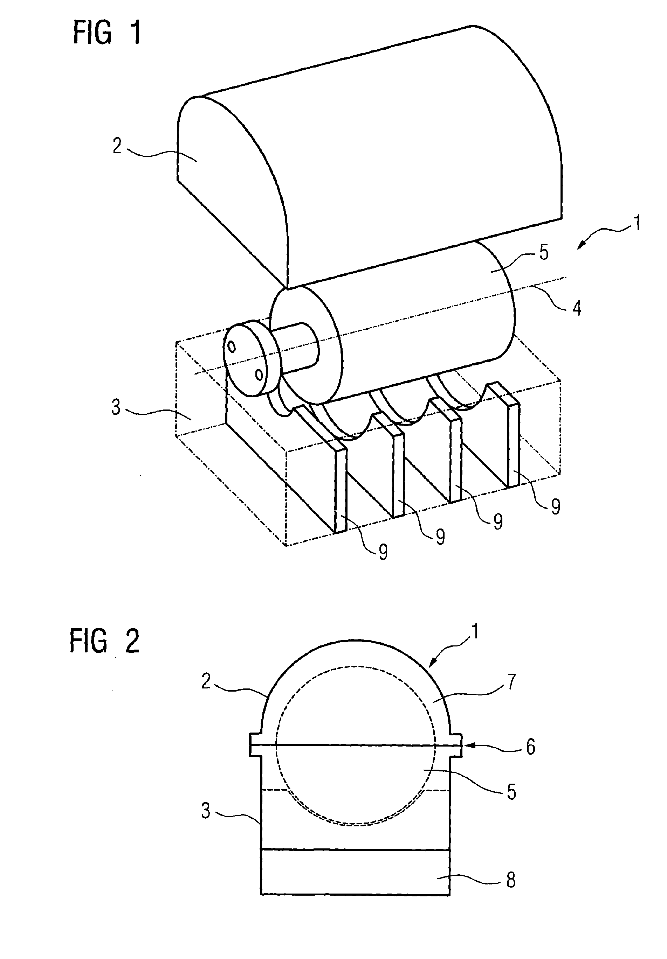

In Figur 1 ist eine perspektivische Darstellung eines Schwertransportbehälters 1 zu sehen. Der Schwertransportbehälter 1 weist ein Behälteroberteil 2 und ein Behälterunterteil 3 auf. In der Figur 1 ist der Schwertransportbehälter 1 in einem geöffneten Zustand dargestellt. In dem Schwertransportbehälter 1 ist ein um eine Rotationsachse 4 drehbar gelagerter Generatorläufer 5 oder Erregerläufer angeordnet.

Das Behälteroberteil 2 und das Behälterunterteil 3 sind aus einem biegesteifen und tragfähigen Material ausgebildet. Als biegesteifes Material könnte Stahl eingesetzt werden.

Es können aber auch andere Materialien eingesetzt werden.

In der Figur 2 ist eine Frontansicht des Schwertransportbehälters 1 im geschlossenen Zustand dargestellt. Das Behälteroberteil 2 wird an einer Auflagestelle 6 mit dem Behälteroberteil 3 verbunden. Die Verbindung kann durch Schrauben erfolgen. Denkbar sind auch andere Verbindungsmöglichkeiten.

Vor dem Verbinden des Behälteroberteils 2 mit dem Behälterunterteil 3 wird ein Dichtungselement dazwischen angeordnet, um den Innenraum 7 des Schwertransportbehälters luftdicht abzudichten.

Als Dichtungselement kann eine nicht dargestellte Dichtschnur eingesetzt werden.

Der Schwertransportbehälter 1 wird mit Lastverteilern 8 verbunden. Die Lastverteiler 8 sind derart ausgebildet, dass sie sowohl für den Schifftransport als auch für den Transport auf der Straße und Schiene geeignet sind.

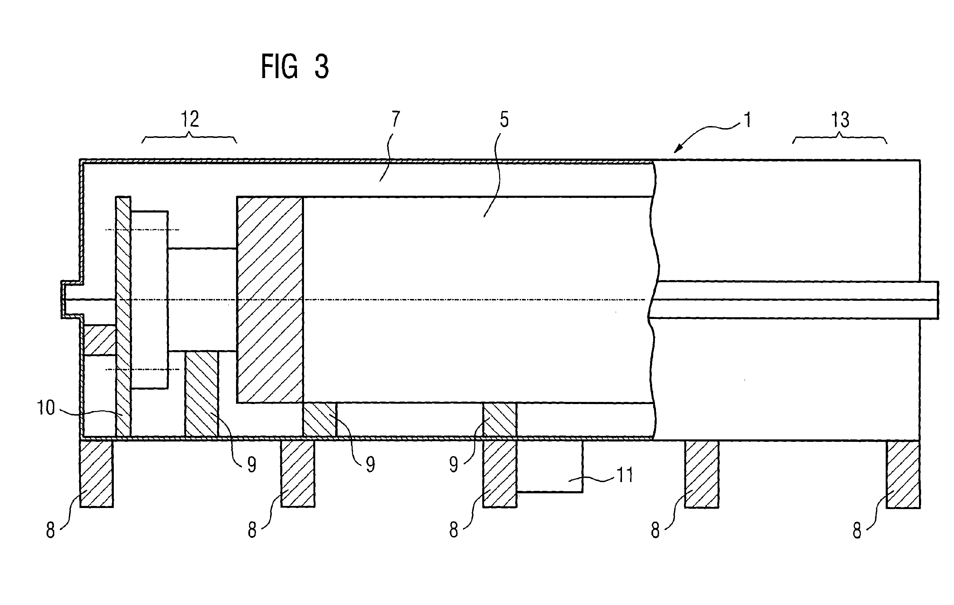

In der Figur 3 ist der Schwertransportbehälter 1 in einer Seitenansicht dargestellt. Der Generatorläufer 5 oder Erregerläufer wird im Innenraum 7 auf Auflageelemente 9 abgelegt. Die Anzahl der Auflageelemente 9 sollte möglichst groß sein, um eine gleichmäßige Gewichtsverteilung des Generatorläufers 5 oder Erregerläufers auf die Auflageelemente 9 zu bewirken.

Die Auflageelemente 9 sind derart ausgebildet, dass sie der äußeren Form des Generatorläufers 5 oder Erregerläufers angepasst sind. Da die äußere Form des Generatorläufers 5 oder des Erregerläufers im wesentlichen eine zylinderförmige Gestalt hat, sollten die Auflageelemente 9 halbschalenförmig ausgebildet sein.

Durch die halbschalenförmige Gestaltung der Auflageelemente 9 wird ein unkontrolliertes Bewegen des Generatorläufers 5 oder Erregerläufers quer zur Rotationsachse 4 wirksam verhindert.

Die Auflageelemente 9 sind im Behälterunterteil 3 angeordnet. Im Behälteroberteil 2 können auch Auflageelemente 9 angeordnet werden. Der Generatorläufer 5 oder Erregerläufer wird dadurch in dem Schwertransportbehälter 1 zusätzlich stabilisiert, so dass ein unkontrolliertes Bewegen im Innenraum 7 weitgehend verhindert wird.

Im Innenraum 7 des Schwertransportbehälters 1 ist ein Befestigungselement 10 am Behälteroberteil 2 oder Behälterunterteil 3 angeordnet. In dem in Figur 3 dargestellten Ausführungsbeispiel ist das Befestigungselement 10 am Behälterunterteil 3 angeordnet. Der Generatorläufer 5 oder Erregerläufer wird mittels Schrauben oder ähnlicher Verbindungsmöglichkeiten an dem Befestigungselement 10 befestigt. Dadurch ist ein unkontrolliertes Bewegen des Generatorläufers 5 oder Erregerläufers bei einer starken Beschleunigung oder Verzögerung des Transportbehälters 1 wirksam vermieden.

Der Generatorläufer 5 oder Erregerläufer wird vorwiegend an einem, in einer zur Rotationsachse 4 parallel verlaufenden axialen Richtung, äußeren Ende 12 an das Befestigungselement 10 befestigt.

An einem zweiten äußeren Ende 13 des Generatorläufers 5 oder Erregerläufers kann ein nicht näher dargestelltes zusätzliches Befestigungselement angeordnet werden. Dadurch wird der Generatorläufer 5 oder Erregerläufer zusätzlich im Schwertransportbehälter 1 befestigt.

Das Behälterunterteil 3 ist mit einer Einlassöffnung ausgebildet. Die Einlassöffnung dient zum Anschluss einer Stickstoffversorgungseinheit 11. Die Stickstoffversorgungseinheit 11 ist zum Befüllen des Schwertransportbehälters 1 mit Stickstoff ausgebildet.

Es ist von Vorteil, den Innenraum 7 vor dem Befüllen mit Stickstoff mittels einer nicht näher dargestellten Saugeinrichtung über eine Auslassöffnung in dem Behälterunterteil 3 zu evakuieren.

Als Saugeinrichtung kann eine Pumpe eingesetzt werden.

Selbstverständlich kann die Saugeinrichtung und die Auslassöffnung auch am Behälteroberteil angeordnet werden.

In einer alternativen Ausführungsform wird die Stickstoffversorgungseinheit 11 permanent an das Behälterunterteil 3 angeordnet. Einer möglicherweise auftauchenden Undichtigkeit zwischen dem Behälteroberteil 2 und dem Behälterunterteil 3 wird durch die permanente Versorgung mit Stickstoff über die Stickstoffversorgungseinheit 11 entgegengewirkt.

Selbstverständlich kann auch die Einlassöffnung zum Anschluss einer Stickstoffversorgungseinheit 11 am Behälteroberteil angeordnet sein.

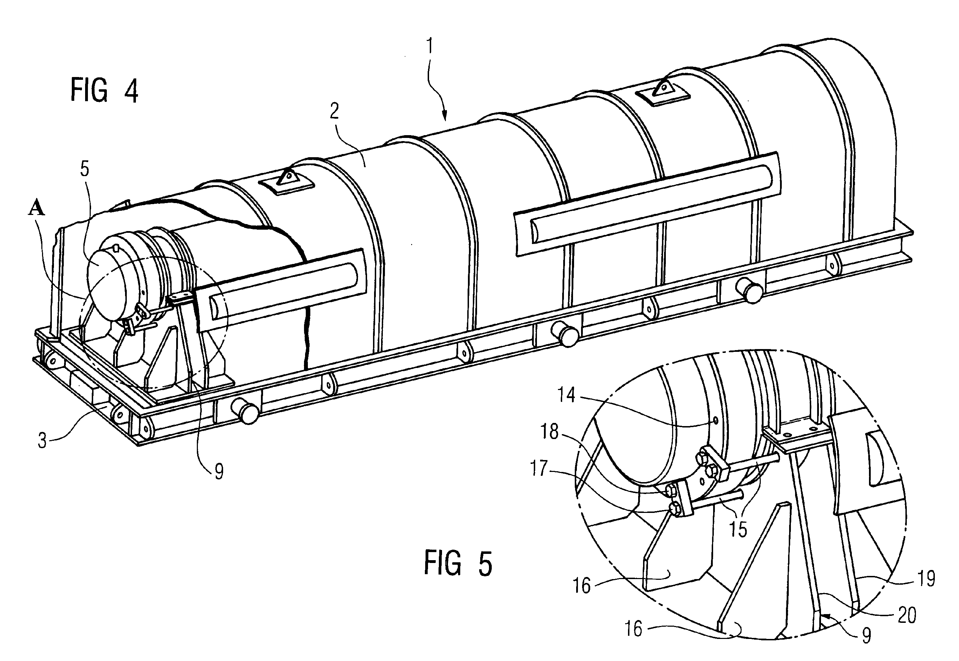

In der Figur 4 ist eine weitere Ausführungsform des Schwertransportbehälters 1 dargestellt. Der Schwertransportbehälter 1 besteht hierbei aus einer als Palette ausgebildetem Gehäuseunterteil 3 und einem Gehäüseoberteil 2. Das Gehäuseunterteil 3 hat in dieser Ausführungsform gemäß Figur 4 eine ebene Gestalt. Der Vorteil liegt hierbei darin, dass das Gehäuseunterteil 3 keine Wände aufweist. Der Generator bzw. Erregerläufer 5 kann hierdurch einfacher auf das Behälterunterteil 3 gelegt werden. Ein erschwertes Anheben des Generator bzw. Erregerläufers 5 über eine Wand des Behälterunterteils 3 entfällt.

Das Behälteroberteil 2 ist in der Figur 4 aufgeschnitten dargestellt, damit die Ausführungsform des Auflageelementes 9 besser zu erkennen ist.

In der Figur 5 ist eine vergrößerte Darstellung des Auflageelementes 9 zu sehen. Das Auflageelement weist hierbei zwei Auflageelementteile 19 und 20 auf. Das Gewicht des Erreger- bzw. Generatorläufers 5 wird hierbei auf die beiden Auflageelementteile 19 und 20 verteilt. Die Auflageelementteile 19 und 20 werden durch seitlich angeordnete Stützelemente 16 gegen eine Bewegung in Längsrichtung des Generators bzw. Erregerläufers 5 fixiert. In der in Figur 5 dargestellten Ausführungsform des Auflageelementes 9 wird der Erreger- bzw. Generatorläufer 5 über Befestigungsstangen 15 gehalten. Im Generator bzw. Erregerläufer 5 enthaltene Läuferbohrungen 14 werden Befestigungsstangen 15 geführt und mittels einer Gewindemutter 17 und einer weiteren Läufergewindemutter 18 festgehalten. Dadurch wird der Erreger- bzw. Generatorläufer 5 mit dem Auflageelement 9 verbunden, wodurch ein unkontrolliertes Bewegen des Generator- bzw. Erregerläufers 5 bei einer starken Beschleunigung oder Verzögerung des Transportbehälters 1 wirksam vermieden wird.

## Patentansprüche

1. Schwertransportbehälter (1) zum Lagern und Transportieren eines um eine Rotationsachse (4) drehbar ausgebildeten Generatorläufers (5) oder Erregerläufer
**gekennzeichnet durch**
ein Behälteroberteil (2) und ein Behälterunterteil (3), wobei Behälteroberteil (2) und Behälterunterteil (3) biegesteif ausgebildet und gasdicht miteinander verbunden sind und zumindest das Behälterunterteil (3) aus einem auf das Gewicht des Generatorläufers oder Erregerläufers abgestimmten tragfähigen Material ausgebildet sind.

2. Schwertransportbehälter (1) nach Anspruch 1,
**dadurch gekennzeichnet, dass**
dauerhaft an dem Schwertransportbehälter eine Stickstoffversorgungseinheit (11) angeordnet ist.

3. Schwertransportbehälter (1) nach Anspruch 1 und 2,
**dadurch gekennzeichnet, dass**
an dem Schwertransportbehälter eine Einlassöffnung zum Anschluss einer Stickstoffversorgungseinheit (11) zum Befüllen des Schwertransportbehälters (1) mit Stickstoff angeordnet ist.

4. Schwertransportbehälter (1) nach einem der vorhergehenden Ansprüche
**dadurch gekennzeichnet, dass** zwischen
Behälteroberteil (2) und Behälterunterteil (3) ein Dichtungselement vorgesehen ist.

5. Schwertransportbehälter (1) nach Anspruch 4,
**dadurch gekennzeichnet, dass**
das Dichtungselement eine Dichtschnur ist.

6. Schwertransportbehälter (1) nach einem der vorhergehenden Ansprüche,
mit der Außenumfangsform des Generatorläufers (5) oder Erregerläufers angepassten Auflageelementen (9) zum Ablegen des Generatorläufers (5) oder Erregerläufers und
mit Befestigungselementen (10) zum Befestigen des Generatorläufers (5) oder Erregerläufer in einer zur Rotationsachse (4) verlaufenden Längsrichtung.
